# EUROPÄISCHE PATENTANMELDUNG

(11) **EP 4 795 912 A1**
(43) Veröffentlichungstag der Anmeldung: **26.08.2026**
(21) Anmeldenummer: 26152211.4
(22) Anmeldetag: 16.01.2026
(51) Int. Cl.: A01B 69/04, G01C 21/20, G06Q 10/047

(54) **ROUTENPLANUNGSSYSTEM**

(30) Priorität: 20.02.2025 DE 102025106552
(71) Anmelder: CLAAS Tractor S.A.S., 78141 Vélizy-Villacoublay Cedex (FR)
(72) Erfinder: Rusterholtz, Thiebaud, 91470 LIMOURS (FR); Monkenbusch, Robin, 33378 Rheda-Wiedenbrück (DE); Niggemeyer, Tobias, 33098 Paderborn (DE)
(74) Vertreter: CLAAS Gruppe

(57) **Zusammenfassung**

Die vorliegende Erfindung betrifft ein Routenplanungssystem (1) zur Bestimmung einer Fahrtroute (12) für zumindest eine autonome landwirtschaftliche Arbeitsmaschine (6) auf einem zu bearbeitenden Feld (11), wobei das Routenplanungssystem (1) für die zumindest eine autonome Arbeitsmaschine (6) im Bereich der Fahrtroute (12) eine Position (P_v) für zumindest einen Servicepunkt (SP1, SP2) vorbestimmt, wobei das Routenplanungssystem (1) eine Benutzerschnittstelle (2) umfasst, die dazu eingerichtet ist, die vorbestimmte Position (P_v) des zumindest einen Servicepunktes (SP1, SP2) in Abhängigkeit von einer durch die zumindest eine autonome Arbeitsmaschine (6) an das Routenplanungssystem (1) übermittelten aktuellen Betriebssituation der zumindest einen autonomen Arbeitsmaschine (6) zu verändern.

## Beschreibung

Die vorliegende Erfindung betrifft ein Routenplanungssystem gemäß dem Oberbegriff des Anspruches 1.

Ein Routenplanungssystem zur Bestimmung einer Fahrtroute für zumindest eine autonome landwirtschaftliche Arbeitsmaschine auf einem zu bearbeitenden Feld, wobei das Routenplanungssystem für die zumindest eine autonome Arbeitsmaschine im Bereich der Fahrtroute eine Position für zumindest einen Servicepunkt vorbestimmt, ist aus dem Stand der Technik bekannt.

Die EP 3 508 045 A1 beschreibt ein solches Routenplanungssystem, wobei das Routenplanungssystem für einen autonomen Mähdrescher eine Fahrtroute zu einem am Feldrand eines zu bearbeitenden Feld befindlichen Treffpunktes, an welchem ein Überladevorgang auf ein Transportfahrzeug erfolgt, bestimmt. An diesem Treffpunkt können auch andere Serviceleistungen erbracht werden, wie das Betanken des autonomen Mähdreschers durch ein Betankungsfahrzeug. Die Position des vorbestimmten Treffpunktes ist statisch, d.h. diese sind vorab in den vom Routenplanungssystem an den Mähdrescher übermittelten Daten zur Fahrtroute enthalten.

Ausgehend vom vorstehend genannten Stand der Technik liegt der Erfindung die Aufgabe zugrunde, ein Routenplanungssystem der eingangs genannten Art weiterzubilden, welches sich durch eine flexiblere Planung bei der Bestimmung und Festlegung eines Servicepunktes auszeichnet.

Diese Aufgabe wird durch ein Routenplanungssystem mit den Merkmalen des Anspruches 1 gelöst. Vorteilhafte Weiterbildungen sind Gegenstand der Unteransprüche.

Gemäß dem Anspruch 1 wird ein Routenplanungssystem zur Bestimmung einer Fahrtroute für zumindest eine autonome landwirtschaftliche Arbeitsmaschine auf einem zu bearbeitenden Feld vorgeschlagen, wobei das Routenplanungssystem für die zumindest eine autonome Arbeitsmaschine im Bereich der Fahrtroute eine Position für zumindest einen Servicepunkt vorbestimmt. Erfindungsgemäß ist vorgesehen, dass das Routenplanungssystem eine Benutzerschnittstelleumfasst, die dazu eingerichtet ist, die vorbestimmte Position des zumindest einen Servicepunktes in Abhängigkeit von einer durch die zumindest eine autonome Arbeitsmaschine an das Routenplanungssystem übermittelten aktuellen Betriebssituation der zumindest einen autonomen Arbeitsmaschine zu verändern.

Durch die Erfindung kann das Auftreten von Betriebssituation der zumindest einen autonomen Arbeitsmaschine nachträglich berücksichtigt werden, die Einfluss auf die Erreichbarkeit und/oder Zugänglichkeit des zumindest einen vorbestimmten Servicepunktes haben. Die Benutzerschnittstelle des Routenplanungssystems ermöglicht während der Durchführung der durch die zumindest eine autonome Arbeitsmaschine auszuführenden landwirtschaftlichen Arbeitsaufgabe eine Veränderung der vorbestimmten Position des zumindest einen Servicepunktes auf dem Feld vorzunehmen. Hierdurch lässt sich eine Flexibilisierung der Routenplanung bei der Bestimmung und Festlegung eines Servicepunktes erreichen, wenn der vorbestimmte Servicepunkt aufgrund der aktuellen Betriebssituation nicht oder nur unter großem Aufwand ansteuerbar ist.

Insbesondere kann die Veränderung der vorbestimmten Position des zumindest einen Servicepunktes mittels der Benutzerschnittstelle durch manuelles Verschieben der grafisch dargestellten vorbestimmten Position für den zumindest einen zu verändernden Servicepunkt durchführbar sein. Ein Bediener, welcher das Routenplanungssystem zur Bestimmung der Fahrtroute der zumindest einen autonomen landwirtschaftlichen Arbeitsmaschine verwendet, kann auf einfache Weise auf das Auftreten der aktuellen Betriebssituation reagieren, indem dieser die grafisch dargestellte vorbestimmte Position für den zumindest einen zu verändernden Servicepunkt durch Verschieben manuell verändert. Hierzu kann der Bediener eine abweichende Position für den zumindest einen Servicepunkt durch manuelles Verschieben der grafisch dargestellten vorbestimmten Position bestimmen.

Hierbei kann die Benutzerschnittstelle mit einem zeigerbasierten Eingabemittel wie einer Computermaus, einem Trackball, einem Trackpad oder dergleichen verbunden und durch diese bedienbar sein, um die grafisch dargestellte vorbestimmte Position hin zu einer abweichenden Position zu verändern. Alternativ oder zusätzlich kann die Benutzerschnittstelle auch als berührungssensitiver Bildschirm ausgeführt sein.

Bevorzugt kann die Veränderung der vorbestimmten Position des zumindest einen zu verändernden Servicepunktes mittels der Benutzerschnittstelle durch eine zu treffende Auswahl aus mehreren grafisch dargestellten, in Abhängigkeit von der aktuellen Betriebsposition der zumindest einen autonomen Arbeitsmaschine als zugänglich klassifizierten Positionen für den zumindest einen zu verändernden Servicepunkt durchführbar sein.

Auch hier kann unter Zuhilfenahme des zeigerbasierten Eingabemittels und/oder des berührungssensitiven Bildschirms aus den grafisch dargestellten, in Abhängigkeit von der aktuellen Betriebsposition als zugänglich klassifizierten Positionen für den zumindest einen zu verändernden Servicepunkt durch den Bediener ausgewählt werden.

Gemäß einer Weiterbildung kann das Routenplanungssystem dazu eingerichtet sein, in Abhängigkeit von der jeweiligen durch die zumindest eine autonome Arbeitsmaschine auszuführenden landwirtschaftlichen Arbeitsaufgabe Bereiche des Feldes als für die Positionierung des zumindest einen zu verändernden Servicepunktes ungeeignet zu klassifizieren und die ungeeigneten Bereiche für das manuelle Verschieben oder manuelle Auswählen des zumindest einen zu verändernden Servicepunktes visuell zu kennzeichnen bzw. hervorzuheben und zu sperren. Der Bediener kann somit in die Lage versetzt werden, die aktuelle Situation auf dem Feld schneller zu erfassen, um mögliche Bereiche des Feldes, die als für die Positionierung des zumindest einen zu verändernden Servicepunktes geeignet klassifiziert sind, auswählen zu können. Als ungeeignet können Bereiche klassifiziert werden, die bereits durch die zumindest eine autonome Arbeitsmaschine bearbeitet wurden und nicht erneut überfahren werden sollen, um das bereits erzielte Arbeitsergebnis unbeeinflusst zu lassen.

Insbesondere kann das Routenplanungssystem dazu eingerichtet sein, auf Basis von in einer Speichereinheit des Routenplanungssystems hinterlegten oder hinterlegbaren topographischen Daten Bereiche des Feldes und/oder an das Feld angrenzende Bereiche zu identifizieren, die für das Positionieren des zumindest einen zu verändernden Servicepunktes zugänglich sind. Beispielsweise stellen unmittelbar an das Feld angrenzende Baumreihen oder ein angrenzender Graben Bereiche dar, welche als Position für das Vorsehen des zumindest einen zu verändernden Servicepunktes als unzugänglich klassifiziert werden. Hingegen können an das Feld angrenzende Feldwege, Straßen, benachbarte Freiflächen oder dergleichen für das Positionieren des zumindest einen zu verändernden Servicepunktes als zugänglich identifiziert und klassifiziert werden. Ein zu verändernder Servicepunkt kann auch als auf dem zu bearbeitenden Feld liegend identifiziert und klassifiziert werden. Ein zu verändernder Servicepunkt auf dem zu bearbeitenden Feld unterliegt dabei der Einschränkung, dass ein Feldbereich, der bereits bearbeitet wurde, erneut befahren werden darf, ohne dabei das bereits erreichte Arbeitsergebnis negativ zu beeinflussen.

Weiterhin kann das Routenplanungssystem dazu eingerichtet sein, die als zugänglich klassifizierten Bereiche gewichtet zu bewerten, insbesondere in Abhängigkeit von einer zu erbringenden Serviceleistung. Zu erbringende Serviceleistungen können das Auffüllen von Betriebsmitteln, z.B. Kraftstoff, Hilfsstoffe, Dünger, Saatgut oder dergleichen, eine Wartung, eine Reparatur und/oder eine Abholung der autonomen Arbeitsmaschine und/oder des zumindest einen daran adaptierten Anbaugerätes sein. Die Erbringung einer dieser Serviceleistungen kann unterschiedliche Anforderungen an den Platzbedarf stellen. Beispielsweise benötigt ein Fahrzeug, welches die autonome Arbeitsmaschine mit Betriebsmitteln versorgen soll, im Allgemeinen mehr Raum als ein Servicefahrzeug, welches die autonome Arbeitsmaschine zu Wartungszwecken und/oder Reparaturzwecken ansteuert. Die Abholung der autonomen Arbeitsmaschine erfordert gegebenenfalls mehr Raum als das Nachfüllen mit Betriebsmitteln, um beispielsweise für die Einnahme einer Verladeposition eines Transportfahrzeugs rangieren zu können.

Insbesondere kann das Routenplanungssystem dazu eingerichtet sein, die Bewertung der Zugänglichkeit als abrufbare Information zum jeweiligen Servicepunkt zuzuordnen. Dabei kann der Bediener durch Anwahl des zumindest einen Servicepunktes, der durch die Benutzerschnittstelle visualisiert wird, die hinterlegte Information zu diesem Servicepunkt abrufen und sich anzeigen lassen. Beispielsweise kann der zumindest eine Servicepunkt ungeeignet für das Nachfüllen von Betriebsmitteln sein, aber geeignet zur Wartung bzw. zur Abholen einer defekten autonomen Arbeitsmaschine, was Gegenstand einer solchen hinterlegten Information sein kann.

Gemäß einer Weiterbildung kann das Routenplanungssystem dazu eingerichtet sein, in Abhängigkeit von der durch die zumindest eine autonome Arbeitsmaschine an das Routenplanungssystem übermittelten aktuellen Betriebssituation als zugänglich klassifizierte Positionen für den zumindest einen zu verändernden Servicepunkt vorzuschlagen. Der Bediener kann hierdurch von der Beurteilung der Situation und der zu treffenden Auswahl der an die aktuelle Betriebssituation angepassten Position des Servicepunkt entlastet werden.

Insbesondere das Routenplanungssystem dazu eingerichtet sein, von der zumindest einen autonomen Arbeitsmaschine beim Erreichen des zumindest einen Servicepunktes eine Rückmeldung zu empfangen und diese mittels der Benutzerschnittstelle auszugeben.

Bevorzugt kann das Routenplanungssystem dazu eingerichtet sein, von der zumindest einen autonomen Arbeitsmaschine eine Meldung zu empfangen, wenn die Arbeitsmaschine aufgrund eines durch bordeigene Sensoren festgestellten Defektes den zumindest einen Servicepunkt selbsttätig ansteuert.

Gemäß einer bevorzugten Weiterbildung kann das Routenplanungssystem dazu eingerichtet sein, von der zumindest einen autonomen Arbeitsmaschine und/oder zumindest eines daran adaptierten Anbaugerätes eine Meldung zu empfangen, wenn die Arbeitsmaschine aufgrund eines durch bordeigene Sensoren festgestellten Betriebs- und/oder Hilfsstoffstandes den zumindest einen Servicepunkt selbsttätig ansteuert.

Weiterhin kann das Routenplanungssystem dazu eingerichtet sein, ausgehend von der aktuellen Position der zumindest einen autonomen Arbeitsmaschine eine voraussichtliche Ankunftszeit an dem zumindest einen Servicepunkt zu bestimmen. Dabei können ein aktueller Betriebs- und/oder Hilfsmittelstand, topografische Daten des Feldes und/oder bestehende Witterungsbedingungen bei der Bestimmung der voraussichtlichen Ankunftszeit berücksichtigt werden. Die Information über die voraussichtliche Ankunftszeit kann bevorzugt an eine Person übermittelt werden, die den zumindest einen anzusteuernden Servicepunkt anfährt, um die erforderlich Serviceleistung zu erbringen.

Des Weiteren kann das Routenplanungssystem dazu eingerichtet sein, auf Basis der in der Speichereinheit des Routenplanungssystems hinterlegten oder hinterlegbaren topographischen Daten des Feldes und unter Berücksichtigung der Meldung der zumindest einen autonomen Arbeitsmaschine automatisch eine zugängliche Position für den nächstgelegenen Servicepunkt zu bestimmen und die Positionsdaten automatisch an die zumindest eine autonome Arbeitsmaschine zu übermitteln.

Weiter bevorzugt kann das Routenplanungssystem dazu eingerichtet sein, durch eine Eingabe mittels der Benutzerschnittstelle das Anfahren des zumindest einen Servicepunktes manuell auszulösen.

Insbesondere kann die Benutzerschnittstelle als eine mobile Datenverarbeitungsvorrichtung ausgeführt sein, die mit dem Routenplanungssystem im Datenaustausch steht.

Die vorliegende Erfindung wird nachstehend anhand eines in den Zeichnungen dargestellten Ausführungsbeispieles näher erläutert.

Es zeigen:
- Fig. 1: schematisch und exemplarisch ein Routenplanungssystem zur Bestimmung einer Fahrtroute für zumindest eine autonome landwirtschaftliche Arbeitsmaschine auf einem zu bearbeitenden Feld dargestellt;
- Fig. 2: schematisch und exemplarisch eine Anzeige einer Benutzerschnittstelle des Routenplanungssystems;
- Fig. 3: schematisch und exemplarisch die Anzeige gemäß Fig. 2 mit als ungeeignet klassifizierten und gekennzeichneten Bereichen für einen Servicepunkt; und
- Fig. 4: schematisch und exemplarisch die Anzeige gemäß Fig. 2 mit als geeignet klassifizierten Alternativpositionen für einen Servicepunkt.

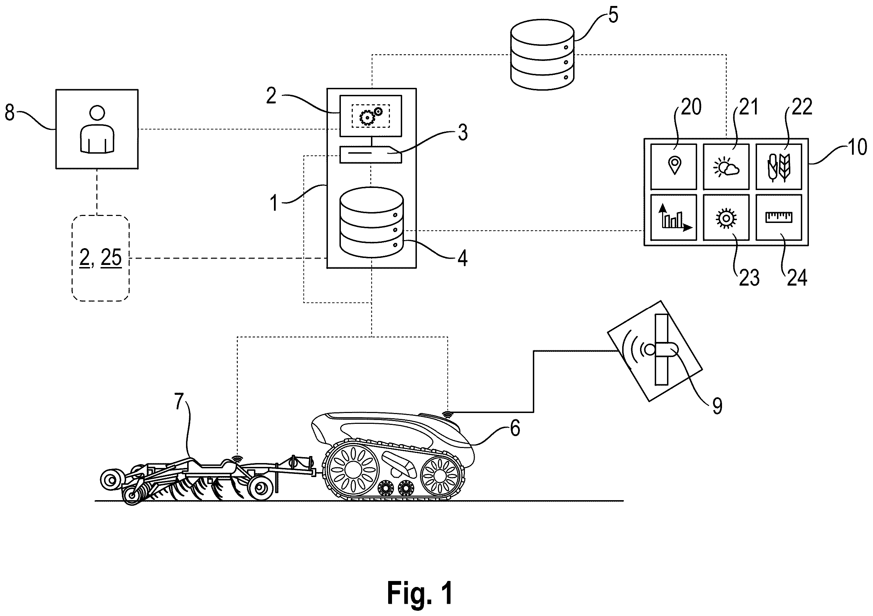

In Fig. 1 ist schematisch und exemplarisch ein Routenplanungssystem 1 zur Bestimmung einer Fahrtroute für zumindest eine autonome landwirtschaftliche Arbeitsmaschine 6 auf einem zu bearbeitenden Feld 11 dargestellt. Das Routenplanungssystem 1 umfasst eine Benutzerschnittstelle 2, eine Recheneinheit 3 sowie eine Datenbank 4. Ein Bediener 8 des Routenplanungssystems 1 kann mittels der Benutzerschnittstelle 2 mit dem Routenplanungssystem 1 interagieren. Bevorzugt ist die Benutzerschnittstelle 2 als berührungssensitiver Bildschirm ausgeführt.

Das Routenplanungssystem 1 kann weiterhin mit einer Referenzdatenbank 5 zur Übertragung von Daten verbunden sein, in der Referenzdaten 10 hinterlegt sein können, auf die das Routenplanungssystem 1 zugreifen kann. Die Referenzdaten 10 können topografische Daten des Feldes 11 und angrenzender Bereiche 13, Witterungsdaten 21, Informationen zur Durchzuführenden Arbeitsaufgabe 22, Betriebsparameter 23 der zumindest einen autonomen Arbeitsmaschine 6 und/oder des zumindest einen daran adaptierten Anbaugerätes 7, maschinenspezifische Daten der zumindest einen autonomen Arbeitsmaschine 6 und/oder des zumindest einen daran adaptierten Anbaugerätes 7, wie Art und Ausführung sowie Verbrauch von Betriebs- und/oder Hilfsstoffen, umfassen.

Die Arbeitsmaschine 6 steht mit einer Positionsbestimmungseinrichtung 9 zur Positionsbestimmung auf dem Feld 11 oder an das Feld 11 angrenzenden Bereichen 13 in Verbindung oder ist mit einer Positionsbestimmungseinrichtung 9 ausgeführt. Die Positionsbestimmungseinrichtung 9 kann zur Positionsbestimmung mittels Satellitennavigationssignalen ausgebildet und/oder programmiert sein, wobei wenigstens eine Satellitenvorrichtung zur Positionsbestimmung der autonomen landwirtschaftlichen Arbeitsmaschine 6 verwendet werden kann.

Das Routenplanungssystem 1 ist zur Bestimmung einer Fahrtroute 12 für die zumindest eine autonome Arbeitsmaschine 6 auf dem zu bearbeitenden Feld 11 eingerichtet. Für die Aufrechterhaltung des laufenden Betriebes der zumindest einen autonomen Arbeitsmaschine 6 ist es erforderlich, eine Position P_v zumindest eines Servicepunktes SP1, SP2 im Bereich der Fahrtroute 12 vorzubestimmen. Die vorbestimmte Position P_v des zumindest einen Servicepunktes SP1, SP2 kann von der zumindest einen autonomen Arbeitsmaschine 6 selbststätig angesteuert werden. Dies ist beispielsweise dann der Fall, wenn der von der Arbeitsmaschine 6 und/oder dem zumindest einen Anbaugerät 7 mitgeführte Betriebs- und/oder Hilfsstoffstand zu gering ist, um die durchzuführende Arbeitsaufgabe 22 zu beenden.

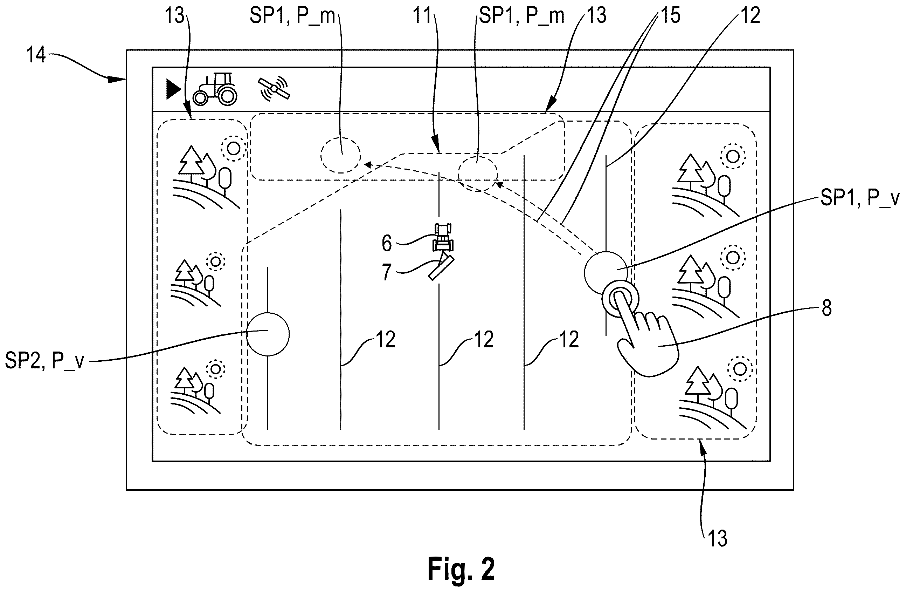

In Fig. 2 ist schematisch und exemplarisch eine Anzeige 14 der Benutzerschnittstelle 2 des Routenplanungssystems 1 dargestellt. Die Anzeige 14 bildet schematisch das zu bearbeitende Feld 11 sowie die an das Feld 11 angrenzenden Bereiche 13 ab. Weiterhin sind die durch das Routenplanungssystem 1 bestimmten Fahrtrouten 12 dargestellt, entlang derer sich die zumindest eine autonome Arbeitsmaschine 6 mit dem daran adaptierten Anbaugerät 7 bewegt, um eine landwirtschaftliche Arbeitsaufgabe 22 auf dem zu bearbeitenden Feld 11 durchzuführen. Die durch die Benutzerschnittstelle 2 dargestellte Anzeige 14 umfasst die von dem Routenplanungssystem 1 vorbestimmten Positionen P_v der Servicepunkte SP1, SP2. Lediglich beispielhaft befinden sich die vorbestimmten Positionen P_v der Servicepunkte SP1, SP2 am äußeren Rand des Feldes 11. Die Anzahl und Lage der vorbestimmten Positionen P_v der Servicepunkte SP1, SP2 kann in Abhängigkeit von der Feldgröße und/oder der Topografie des Feldes 11 variieren. So kann die vorbestimmte Position P_v eines der Servicepunkte SP1, SP2 auch auf dem zu bearbeitenden Feld 11 liegen. Lediglich zur Veranschaulichung beschränkt sich die dargestellte Anzahl auf zwei Servicepunkte SP1, SP2.

Während der Durchführung der landwirtschaftlichen Arbeitsaufgabe 22 kann eine Betriebssituation auftreten, die Einfluss auf die Erreichbarkeit und/oder Zugänglichkeit des zumindest einen vorbestimmten Servicepunktes SP1, SP2 haben kann. So kann die autonome Arbeitsmaschine 6 aufgrund von äußeren Einflüssen, beispielsweise Witterungsbedingungen, oder vom Bediener 8 vorgenommene Betriebsparametereinstellungen, die zu einer Erhöhung der Bearbeitungsintensität führen, einen erhöhten Kraftstoffverbrauch aufweisen. Beispielhaft für eine Erhöhung der Bearbeitungsintensität sind eine Erhöhung der Arbeitstiefe beim Pflügen oder hohe Drehzahlen bei zapfwellengetriebenen rotierenden Bodenbearbeitungsgeräten zu nennen. Ein weiteres Beispiel ist der Verschleißzustand von Bodeneingriffsmitteln wie Pflugschare oder Grubberzinken, der zu einem signifikanten Mehrverbrauch führt. Bei einer autonomen Arbeitsmaschine 6, die beispielsweise zum Häckseln von Erntegut eingerichtet ist, führt eine Verkürzung der Häcksellänge als Betriebsparameter unter anderem zu einer Zunahme des Kraftstoffverbrauchs.

Es kann somit eine Betriebssituation auftreten, in welcher beispielsweise aufgrund des erhöhten Kraftstoffverbrauchs die in Fig. 2 vorbestimmte Positionen P_v des zumindest einen Servicepunktes SP1, SP2 durch die autonome Arbeitsmaschine 6 aus ihrer in Fig. 2 beispielhaft dargestellten gegenwärtigen Position auf dem Feld 11 nicht mehr erreichbar sind.

Um dieser Situation begegnen zu können, ist erfindungsgemäß ist vorgesehen, dass die Benutzerschnittstelle 2 des Routenplanungssystems 1 es ermöglicht, während der Durchführung der durch die zumindest eine autonome Arbeitsmaschine 6 auszuführenden landwirtschaftlichen Arbeitsaufgabe 22 eine Veränderung der vorbestimmten Position P_v des zumindest einen Servicepunktes SP1, SP2 auf dem Feld 11 vorzunehmen.

Hierdurch lässt sich eine Flexibilisierung der Routenplanung bei der Bestimmung und Festlegung eines Servicepunktes SP1, SP2 erreichen, wenn der vorbestimmte Servicepunkt SP1, SP2 aufgrund der aktuellen Betriebssituation nicht oder nur unter großem Aufwand ansteuerbar ist.

Hierzu ist die Benutzerschnittstelle 2 eingerichtet und ausgeführt, die vorbestimmte Position P_v des zumindest einen Servicepunktes SP1, SP2 in Abhängigkeit von einer durch die zumindest eine autonome Arbeitsmaschine 6 an das Routenplanungssystem 1 übermittelte aktuelle Betriebssituation der zumindest einen autonomen Arbeitsmaschine 6 zu verändern.

Hierbei kann die Benutzerschnittstelle 2 mit einem zeigerbasierten Eingabemittel wie einer Computermaus, einem Trackball, einem Trackpad oder dergleichen verbunden und bedienbar sein, um die grafisch dargestellte vorbestimmte Position P_v des zumindest einen Servicepunktes SP1, SP2 manuell zu verändern. Alternativ oder zusätzlich kann die Benutzerschnittstelle 2 auch als berührungssensitiver Bildschirm ausgeführt sein, welcher das grafische Verschieben des zumindest einen Servicepunktes SP1, SP2 durch Berührung des Bildschirms ermöglicht.

Die Veränderung der vorbestimmten Position P_v des zumindest einen Servicepunktes SP1, SP2 mittels der Benutzerschnittstelle 2 ist durch manuelles Verschieben der grafisch dargestellten vorbestimmten Position P_v für den zumindest einen Servicepunkt SP1, SP2 durchführbar. Das manuelle Verschieben des Servicepunktes SP1 ist durch die Hand des Bedieners 8 und einen gestrichelt dargestellten Pfeil 15 veranschaulicht. Der in seiner Position geänderte Servicepunkt SP1 kann durch den Bediener 8 manuell zu einer abweichenden Position P_m für den Servicepunkt SP1 verschoben werden, welche durch die zumindest eine autonome Arbeitsmaschine 6 in der bestehenden Betriebssituation erreichbar ist. In Fig. 2 sind beispielhaft zwei abweichende Positionen P_m des Servicepunktes SP1 dargestellt. Wie bereits weiter oben ausgeführt, bestimmt die aktuelle Betriebssituation der autonomen Arbeitsmaschine 6 die Erreichbarkeit des zumindest einen Servicepunktes SP1, SP2 an der vorbestimmten Position P_v.

Die Veränderung der vorbestimmten Position P_v des zumindest einen Servicepunktes SP1, SP2 kann alternativ oder zusätzlich mittels der Benutzerschnittstelle 2 durch eine zu treffende Auswahl aus mehreren grafisch dargestellten, in Abhängigkeit von der aktuellen Betriebsposition automatisch als zugänglich bestimmten Positionen P_a für den zumindest einen zu verändernden Servicepunkt SP1 durchführbar sein. Hierzu kann das Routenplanungssystem 1 die aktuelle Betriebssituation charakterisierende, von der autonomen Arbeitsmaschine 6 empfange Daten auswerten, um geeignete Vorschläge für aus der aktuellen Betriebsposition der Arbeitsmaschine 6 als zugänglich klassifizierte Positionen P_a des zumindest einen zu verändernden Servicepunkt SP1 zu bestimmen. Der Bediener 8 kann die aus seiner Sicht geeignetere als zugänglich klassifizierte Position P_a für den Servicepunkt SP1 mittels der Benutzerschnittstelle 2 auswählen.

Das Routenplanungssystem 1 ist dazu eingerichtet, in Abhängigkeit von der jeweiligen durch die zumindest eine autonome Arbeitsmaschine 6 auszuführenden landwirtschaftlichen Arbeitsaufgabe 22 Bereiche 16, 17 des Feldes 11 als für die Positionierung des zumindest einen zu verändernden Servicepunktes SP1 ungeeignet zu klassifizieren und die ungeeigneten Bereiche 16, 17 für das manuelle Verschieben und/oder das Auswählen des zumindest einen zu verändernden Servicepunktes SP1 visuell zu kennzeichnen und zu sperren.

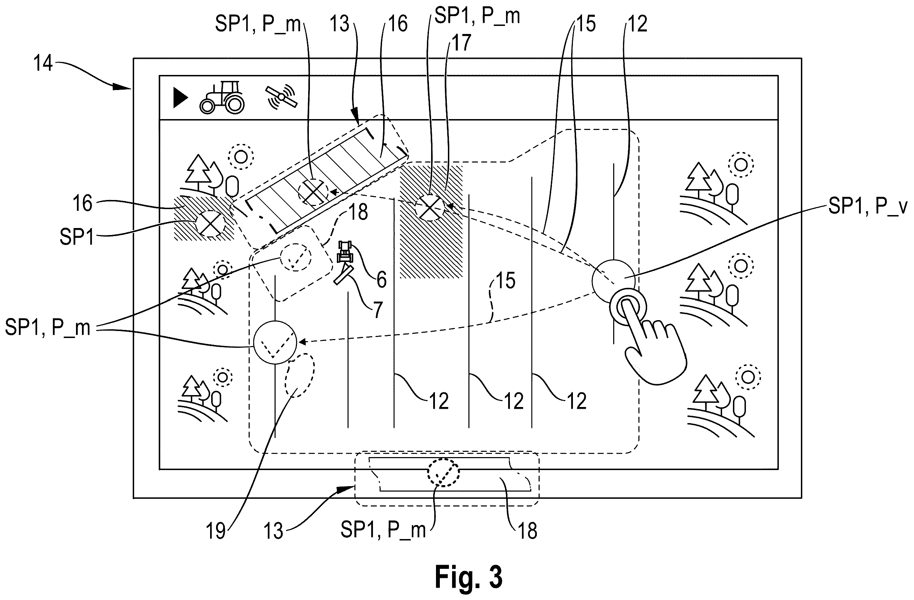

Die Darstellung in Fig. 3 zeigt schematisch und exemplarisch die Anzeige gemäß Fig. 2 mit als ungeeignet klassifizierten und gekennzeichneten Bereichen 16, 17 für einen Servicepunkt SP1, SP2. Im in Fig. 3 dargestellten Ausführungsbeispiel befindet sich in dem als ungeeignet klassifizierten Bereich 16 im an das Feld angrenzenden Bereich 13 beispielsweise ein Graben. Der weitere, ebenfalls als ungeeignet klassifizierte Bereich 16 kann beispielsweise eine Anhöhe sein. Als ungeeignet für das Positionieren des zumindest einen zu verändernden Servicepunktes SP1 können auch Bereiche 17 auf dem Feld 11 klassifiziert werden, die bereits durch die zumindest eine autonome Arbeitsmaschine 6 bearbeitet wurden und nicht erneut überfahren werden sollen, um das bereits erzielte Arbeitsergebnis unbeeinflusst zu lassen.

Das Routenplanungssystem 1 ist insbesondere dazu eingerichtet, auf Basis von in einer Speichereinheit 4 des Routenplanungssystems 1 hinterlegten oder hinterlegbaren topographischen Daten Bereiche auf dem Feld 11 und/oder in an das Feld 11 angrenzenden Bereichen 13 zu identifizieren, die für das Vorsehen des zumindest einen zu verändernden Servicepunktes SP1, SP2 zugänglich sind. Beispielsweise stellen unmittelbar an das Feld 11 angrenzende Baumreihen oder ein angrenzender Graben die Bereiche 16 dar, welche für das Vorsehen des zumindest einen zu verändernden Servicepunktes SP1, SP2 als unzugänglich identifiziert werden. Hingegen können angrenzende Feldwege, Straßen, benachbarte Freiflächen oder dergleichen für das Positionieren des zumindest einen zu verändernden Servicepunktes SP1, SP2 als zugängliche Bereiche 18 identifiziert werden. Ein als zugänglich klassifizierter Bereich 18 für den zu verändernden Servicepunkt SP1, SP2 kann auch auf dem zu bearbeitenden Feld 11 liegend identifiziert werden. Der Bereich 18 für den zu verändernden Servicepunkt SP1, SP2 auf dem Feld 11 unterliegt dabei der Einschränkung, dass der als zugänglicher Bereich identifizierte Feldbereich, der bereits bearbeitet wurde, erneut befahren werden darf, ohne dabei das Arbeitsergebnis negativ zu beeinflussen.

Weiterhin kann das Routenplanungssystem 1 dazu eingerichtet sein, die als zugänglich klassifizierten Bereiche 18 gewichtet zu bewerten, insbesondere in Abhängigkeit von einer zu erbringenden Serviceleistung. Zu erbringende Serviceleistungen können das Auffüllen von Betriebsmitteln, z.B. Kraftstoff, Hilfsstoffe, Dünger, Saatgut oder dergleichen, eine Wartung, eine Reparatur und/oder eine Abholung der autonomen Arbeitsmaschine 6 und/oder des daran adaptierten Anbaugerätes 7 sein. Die Erbringung einer der Serviceleistungen kann unterschiedliche Anforderungen an den Platzbedarf stellen. Beispielsweise benötigt ein Fahrzeug, welches die autonome Arbeitsmaschine 6 mit Betriebsmitteln versorgen soll, im Allgemeinen mehr Raum als ein Servicefahrzeug, welches die autonome Arbeitsmaschine 6 zu Wartungszwecken und/oder Reparaturzwecken ansteuert. Die Abholung der autonomen Arbeitsmaschine 6 und/oder des daran adaptierten Anbaugerätes 7 erfordert gegebenenfalls mehr Raum als das Nachfüllen mit Betriebsmitteln, um beispielsweise für die Einnahme einer Verladeposition eines Transportfahrzeugs rangieren zu können.

Gemäß einem weiteren Aspekt kann das Routenplanungssystem 1 dazu eingerichtet sein, die Bewertung der Zugänglichkeit als abrufbare Information zum jeweiligen Servicepunkt SP1, SP2 zuzuordnen. Dabei kann der Bediener 8 durch Anwahl des zumindest einen Servicepunktes SP1, SP2, der durch die Benutzerschnittstelle 2 visualisiert wird, die hinterlegte Information zu diesem Servicepunkt SP1, SP2 abrufen und sich anzeigen lassen. Beispielsweise kann der zumindest eine Servicepunkt SP1, SP2 ungeeignet für das Nachfüllen von Betriebsmitteln sein, aber geeignet zur Wartung bzw. zur Abholen einer defekten autonomen Arbeitsmaschine 6 und/oder des daran adaptierten Anbaugerätes 7. Beispielsweise kann sich durch das Anwählen das Anwählen des zumindest einen Servicepunktes SP1, SP2 ein Popup-Fenster 19 öffnen, welches die hinterlegten Informationen zu diesem Servicepunkt SP1, SP2 enthält.

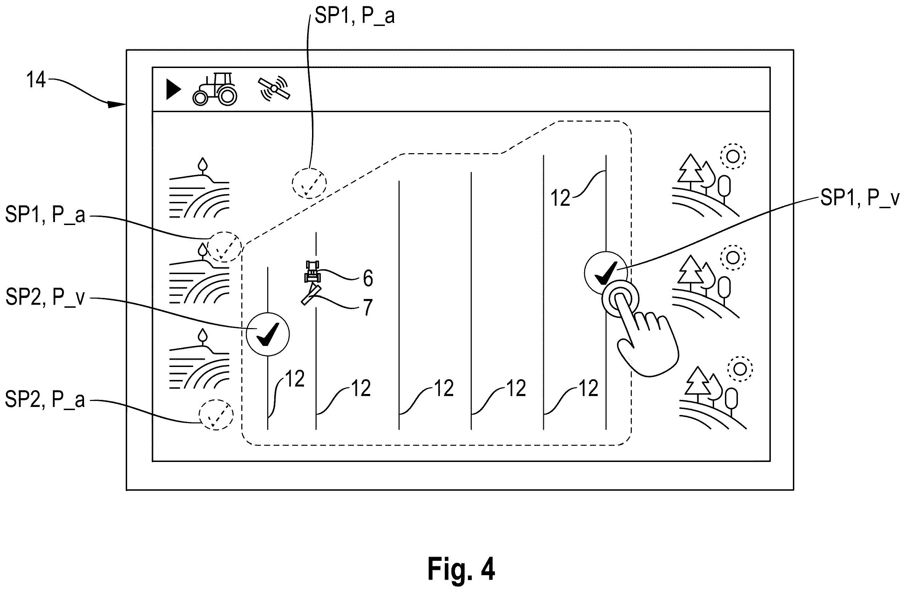

In Fig. 4 ist schematisch und exemplarisch die Anzeige gemäß Fig. 2 mit als geeignet klassifizierten Positionen P_a als Alternativen für einen Servicepunkt SP1, SP2 dargestellt. Hierzu ist das Routenplanungssystem 1 dazu eingerichtet, in Abhängigkeit von der durch die zumindest eine autonome Arbeitsmaschine 6 an das Routenplanungssystem 1 übermittelten aktuellen Betriebssituation eine oder mehrere als zugänglich klassifizierte Positionen P_a als Alternativen zur vorbestimmten Position P_v für den zumindest einen zu verändernden Servicepunkt SP1, SP2 vorzuschlagen. Der Bediener 8 kann hierdurch von der Beurteilung der Situation und der zu treffenden Auswahl der an die aktuelle Betriebssituation angepassten Position des Servicepunkt SP1, SP2 entlastet werden.

Das Routenplanungssystem 1 ist dazu eingerichtet, von der zumindest einen autonomen Arbeitsmaschine 6 beim Erreichen des zumindest einen Servicepunktes SP1, SP2 eine Rückmeldung zu empfangen und diese mittels der Benutzerschnittstelle 2 auszugeben.

Bevorzugt kann das Routenplanungssystem dazu eingerichtet sein, von der zumindest einen autonomen Arbeitsmaschine 6 eine Meldung zu empfangen, wenn die Arbeitsmaschine 6 aufgrund eines durch bordeigene Sensoren festgestellten Defektes den zumindest einen Servicepunkt SP1, SP2 selbsttätig ansteuert. Ein durch bordeigene Sensoren festgestellter Defekt stellt eine weitere Betriebssituation dar, in welcher eine manuelle oder automatische Veränderung der vorbestimmten Position P_v des zumindest einen Servicepunktes SP1, SP2 erforderlich sein kann. So können durch das selbsttätige Ansteuern des nächsten als geeignet klassifizierten Servicepunktes SP1, SP2 eine zeitnahe Reparatur mögliche weitere Schäden an der autonomen Arbeitsmaschine 6 und/oder dem zumindest einen Anbaugerät 7 vermieden werden.

Gemäß einer bevorzugten Weiterbildung kann das Routenplanungssystem 1 dazu eingerichtet sein, von der zumindest einen autonomen Arbeitsmaschine 6 eine Meldung zu empfangen, wenn die autonome Arbeitsmaschine 6 aufgrund eines durch bordeigene Sensoren festgestellten Betriebs- und/oder Hilfsstoffstandes den zumindest einen Servicepunkt SP1, SP2 selbsttätig ansteuert.

Weiterhin kann das Routenplanungssystem 1 dazu eingerichtet sein, ausgehend von der aktuellen Position der zumindest einen autonomen Arbeitsmaschine 6 eine voraussichtliche Ankunftszeit an dem zumindest einen Servicepunkt SP1, SP2 zu bestimmen. Dabei können ein aktueller Betriebs- und/oder Hilfsmittelstand, topografische Daten des Feldes 11 und/oder bestehende Witterungsbedingungen bei der Bestimmung der voraussichtlichen Ankunftszeit berücksichtigt werden. Die Information über die voraussichtliche Ankunftszeit kann bevorzugt an eine Person übermittelt werden, die den zumindest einen Servicepunkt SP1, SP2 anfährt, um die erforderlich Serviceleistung zu erbringen.

Des Weiteren kann das Routenplanungssystem 1 dazu eingerichtet sein, auf Basis der in der Speichereinheit 4 des Routenplanungssystems 1 hinterlegten oder hinterlegbaren topographischen Daten des Feldes 11 und unter Berücksichtigung der von der zumindest einen autonomen Arbeitsmaschine 6 generierten Meldung eine als zugänglich klassifizierte bestimmte Position P_a für den nächstgelegenen Servicepunkt SP1, SP2 automatisch zu bestimmen und die Positionsdaten automatisch an die zumindest eine autonome Arbeitsmaschine 6 zu übermitteln. Dies kann insbesondere in Betriebssituationen relevant sein, wenn die autonome Arbeitsmaschine 6 aufgrund eines durch bordeigene Sensoren festgestellten Defektes den zumindest einen Servicepunkt SP1, SP2 selbsttätig ansteuert soll.

Weiter bevorzugt kann das Routenplanungssystem 1 dazu eingerichtet sein, durch eine Eingabe mittels der Benutzerschnittstelle 2 das Anfahren des zumindest einen Servicepunktes SP1, SP2 manuell auszulösen. So kann die vorbestimmte Position P_V des zumindest einen Servicepunktes SP1, SP2 verändert werden und im Anschluss wird die autonome Arbeitsmaschine 6 angesteuert, um die abweichende Position P_m des zumindest einen Servicepunktes SP1, SP2 unverzüglich anzufahren.

Die Benutzerschnittstelle 2 kann als eine mobile Datenverarbeitungsvorrichtung 25 ausgeführt ist, die mit dem Routenplanungssystem 1 bevorzugt drahtlos im Datenaustausch steht. Die mobile Datenverarbeitungsvorrichtung 25 kann bevorzugt als Smartphone, Tablet oder Notebook ausgeführt sein.

### Bezugszeichenliste

- 1: Routenplanungssystem
- 2: Benutzerschnittstelle
- 3: Recheneinheit
- 4: Speichereinheit
- 5: Referenzdatenbank
- 6: Arbeitsmaschine
- 7: Anbaugerät
- 8: Bediener
- 9: Positionsbestimmungseinrichtung
- 10: Referenzdaten
- 11: Feld
- 12: Fahrtroute
- 13: Bereich
- 14: Anzeige
- 15: Pfeil
- 16: Unzugänglicher Bereich
- 17: Unzugänglicher Bereich
- 18: Zugänglicher Bereich
- 19: Popup-Fenster
- 20: Topografische Daten
- 21: Witterungsdaten
- 22: Arbeitsaufgabe
- 23: Betriebsparameter
- 24: Maschinenspezifische Daten
- 25: Datenverarbeitungsvorrichtung

- P_v: Vorbestimmte Position
- P_m: Abweichende Position
- P_a: Zugänglich klassifizierte Position
- SP1: Servicepunkt
- SP2: Servicepunkt

## Patentansprüche

1. Routenplanungssystem (1) zur Bestimmung einer Fahrtroute (12) für zumindest eine autonome landwirtschaftliche Arbeitsmaschine (6) auf einem zu bearbeitenden Feld (11), wobei das Routenplanungssystem (1) für die zumindest eine autonome Arbeitsmaschine (6) im Bereich der Fahrtroute (12) eine Position (P_v) für zumindest einen Servicepunkt (SP1, SP2) vorbestimmt, **dadurch gekennzeichnet, dass** das Routenplanungssystem (1) eine Benutzerschnittstelle (2) umfasst, die dazu eingerichtet ist, die vorbestimmte Position (P_v) des zumindest einen Servicepunktes (SP1, SP2) in Abhängigkeit von einer durch die zumindest eine autonome Arbeitsmaschine (6) an das Routenplanungssystem (1) übermittelten aktuellen Betriebssituation der zumindest einen autonomen Arbeitsmaschine (6) zu verändern.

2. Routenplanungssystem (1) nach Anspruch 1, **dadurch gekennzeichnet, dass** die Veränderung der vorbestimmten Position (P_v) des zumindest einen Servicepunktes (SP1, SP2) mittels der Benutzerschnittstelle (2) durch manuelles Verschieben der grafisch dargestellten vorbestimmten Position (P_v) für den zumindest einen Servicepunkt (SP1, SP2) durchführbar ist.

3. Routenplanungssystem (1) nach Anspruch 1 oder 2, **dadurch gekennzeichnet, dass** die Veränderung der vorbestimmten Position (P_v) des zumindest einen Servicepunktes (SP1, SP2) mittels der Benutzerschnittstelle (2) durch eine zu treffende Auswahl aus mehreren grafisch dargestellten, in Abhängigkeit von der aktuellen Betriebsposition als zugänglich klassifizierten Positionen (P_a) für den zumindest einen zu verändernden Servicepunkt (SP1, SP2) durchführbar ist.

4. Routenplanungssystem (1) nach Anspruch 1 bis 3, **dadurch gekennzeichnet, dass** das Routenplanungssystem (1) dazu eingerichtet ist, in Abhängigkeit von der jeweiligen durch die zumindest eine autonome Arbeitsmaschine (6) auszuführenden landwirtschaftlichen Arbeitsaufgabe (22) Bereiche (16, 17) des Feldes (11) als für die Positionierung des zumindest einen zu verändernden Servicepunktes (SP1, SP2) ungeeignet zu klassifizieren und die ungeeigneten Bereiche (16, 17) für das manuelle Verschieben oder Auswählen des zumindest einen zu verändernden Servicepunktes (SP1, SP2) visuell zu kennzeichnen und zu sperren.

5. Routenplanungssystem (1) nach Anspruch 1 bis 4, **dadurch gekennzeichnet, dass** das Routenplanungssystem (1) dazu eingerichtet ist, auf Basis von in einer Speichereinheit (4) des Routenplanungssystems (1) hinterlegten oder hinterlegbaren topographischen Daten (20) Bereiche (18) des Feldes (11) und/oder an das Feld (11) angrenzende Bereiche (18) zu identifizieren, die für das Vorsehen des zumindest einen zu verändernden Servicepunktes (SP1, SP2) zugänglich sind.

6. Routenplanungssystem (1) nach Anspruch 5, **dadurch gekennzeichnet, dass** das Routenplanungssystem (1) dazu eingerichtet ist, die als zugänglich klassifizierten Bereiche (18) gewichtet zu bewerten, insbesondere in Abhängigkeit von einer am Servicepunkt (SP1, SP2) zu erbringenden Serviceleistung.

7. Routenplanungssystem (1) nach Anspruch 6, **dadurch gekennzeichnet, dass** das Routenplanungssystem ()1 dazu eingerichtet ist, die Bewertung der Zugänglichkeit als abrufbare Information zum jeweiligen Servicepunkt (SP1, SP2) zuzuordnen.

8. Routenplanungssystem (1) nach einem der vorangehenden Ansprüche, **dadurch gekennzeichnet, dass** das Routenplanungssystem (1) dazu eingerichtet ist, in Abhängigkeit von der durch die zumindest eine autonome Arbeitsmaschine (6) an das Routenplanungssystem (1) übermittelten aktuellen Betriebssituation als zugänglich klassifizierte Positionen (P_a) für den zumindest einen zu verändernden Servicepunkt (SP1, SP2) vorzuschlagen.

9. Routenplanungssystem (1) nach einem der Ansprüche 2 bis 8, **dadurch gekennzeichnet, dass** das Routenplanungssystem (1) dazu eingerichtet ist, von der zumindest einen autonomen Arbeitsmaschine (6) beim Erreichen des zumindest einen Servicepunktes (SP1, SP2) eine Rückmeldung zu empfangen und diese mittels der Benutzerschnittstelle (2) auszugeben.

10. Routenplanungssystem (1) nach einem der Ansprüche 2 bis 9, **dadurch gekennzeichnet, dass** das Routenplanungssystem (1) dazu eingerichtet ist, von der zumindest einen autonomen Arbeitsmaschine (6) eine Meldung zu empfangen, wenn die Arbeitsmaschine (6) aufgrund einer durch bordeigene Sensoren festgestellten Betriebssituation den zumindest einen Servicepunkt (SP1, SP2) selbsttätig ansteuert.

11. Routenplanungssystem (1) nach einem der Ansprüche 2 bis 10, **dadurch gekennzeichnet, dass** das Routenplanungssystem (1) dazu eingerichtet ist, von der zumindest einen autonomen Arbeitsmaschine (6) eine Meldung zu empfangen, wenn die Arbeitsmaschine (6) und/oder zumindest ein daran adaptiertes Anbaugerät (7) aufgrund eines durch bordeigene Sensoren festgestellten Betriebs- und/oder Hilfsstoffstandes den zumindest einen Servicepunkt (SP1, SP2) selbsttätig ansteuert.

12. Routenplanungssystem (1) nach Anspruch 10 oder 11, **dadurch gekennzeichnet, dass** das Routenplanungssystem (1) dazu eingerichtet ist, ausgehend von der aktuellen Position der zumindest einen autonomen Arbeitsmaschine (5) eine voraussichtliche Ankunftszeit an dem zumindest einen Servicepunkt (SP1, SP2) zu bestimmen.

13. Routenplanungssystem (1) nach einem der Ansprüche 10 bis 12, **dadurch gekennzeichnet, dass** das Routenplanungssystem (1) dazu eingerichtet ist, auf Basis der in der Speichereinheit (4) des Routenplanungssystems (1) hinterlegten oder hinterlegbaren topographischen Daten (20) des Feldes (11) und unter Berücksichtigung der Meldung der zumindest einen autonomen Arbeitsmaschine (6) automatisch eine als zugänglich klassifizierte Position (P_a) für den nächstgelegenen Servicepunkt (SP1, SP2) zu bestimmen und die Positionsdaten automatisch an die zumindest eine autonome Arbeitsmaschine (6) zu übermitteln.

14. Routenplanungssystem (1)nach einem der vorangehenden Ansprüche, **dadurch gekennzeichnet, dass** das Routenplanungssystem (1) dazu eingerichtet ist, durch eine Eingabe mittels der Benutzerschnittstelle (2) das Anfahren des zumindest einen Servicepunktes (SP1, SP2) manuell auszulösen.

15. Routenplanungssystem (1) nach einem der vorangehenden Ansprüche, **dadurch gekennzeichnet, dass** die Benutzerschnittstelle (2) als eine mobile Datenverarbeitungsvorrichtung ausgeführt ist, die mit dem Routenplanungssystem (1) im Datenaustausch steht.
